# FASCICULE DE BREVET EUROPEEN

(11) **EP 3 160 725 B1**
(45) Date de publication et mention de la délivrance du brevet: **04.07.2018**
(21) Numéro de dépôt: 15725624.9
(22) Date de dépôt: 29.05.2015
(51) Int. Cl.: B29D 30/38, D07B 1/06, D07B 7/02

(54) **DISPOSITIF ET PROCEDE POUR LA FABRICATION DE PNEUMATIQUES**
VORRICHTUNG UND VERFAHREN ZUR REIFENHERSTELLUNG
APPARATUS AND PROCESS FOR TIRE BUILDING

(30) Priorité: 30.06.2014 FR 1456172
(43) Date de publication de la demande: 03.05.2017
(73) Titulaire: Compagnie Générale des Etablissements Michelin, 63000 Clermont-Ferrand (FR)
(72) Inventeur: BEAUDONNET, Christian, F-63190 Ravel (FR); DEBOEUF, Michel, F-63040 Clermont-Ferrand Cedex 9 (FR); BOURNERIE, Philippe, F-63040 Clermont-Ferrand Cedex 9 (FR)
(74) Mandataire: Noel, Luminita
(86) Numéro de dépôt international: PCT/EP2015/062026
(87) Numéro de publication internationale: WO 2016/000879

(56) Documents cités:
- JP-A- H1 025 680
- JP-A- 2006 334 643
- US-A- 5 002 621
- US-A- 5 009 732
- US-A- 5 393 364
- US-A1- 2005 115 218
- US-A1- 2006 191 618
- US-A1- 2011 079 343

## Description

L'invention concerne le domaine de la fabrication des pneumatiques pour véhicules de tourisme ou utilitaires et s'intéresse plus particulièrement aux procédés d'assemblage permettant de poser successivement l'ensemble des constituants d'un tel pneumatique sans variation sensible du diamètre de pose.

Dans ce type de procédés, l'ensemble des opérations de confection de l'ébauche sont réalisées sur un tambour dont le diamètre correspond de préférence sensiblement au diamètre intérieur du pneumatique (couramment appelé « diamètre au seat » en référence au diamètre normalisé de la jante sur laquelle le pneumatique sera monté lors de son utilisation). Ainsi, non seulement la carcasse, les bourrelets et les flancs, mais aussi les renforts de sommet et la bande de roulement peuvent être posés sur un tambour d'assemblage dont le diamètre correspond sensiblement au diamètre du seat. Un avantage de ce type de procédés est qu'il peut permettre de conserver l'ébauche du pneumatique sur le même tambour tout au long de sa confection. L'ébauche complète peut ensuite être directement introduite dans un moule de vulcanisation où elle prend son diamètre final par l'action d'une pression interne. Un exemple de ce type de procédé est donné dans le document FR1508652.

On appelle conformation la transformation que subit l'ébauche de pneumatique lorsqu'elle passe de sa forme sensiblement tubulaire à la forme généralement toroïdale d'un pneumatique fini. Lors de la conformation, la partie centrale de l'ébauche qui correspond au sommet du pneumatique voit son diamètre augmenter par l'action d'une pression interne alors que les bourrelets sont maintenus au diamètre initial. La différence de circonférence entre le diamètre au seat et le diamètre conformé est généralement comprise entre 30% et 70% et par exemple couramment de l'ordre de 50% pour un pneumatique pour véhicule de tourisme.

Une limite de ces procédés provient du fait que l'armature de sommet des pneumatiques pour véhicules de tourisme ou utilitaires comportent de manière pratiquement systématique des renforts circonférentiels de frettage, souvent appelés « renforts à 0° ». La fonction de ces renforts à 0° est de brider fermement l'expansion circonférentielle du pneumatique lors de son utilisation, notamment à haute vitesse. On parle de renforts à 0° même lorsqu'ils sont posés par enroulement hélicoïdal et donc avec un très léger angle d'hélice. On néglige généralement cet angle d'hélice et l'on considère que l'effet des renforts de frettage est le même que s'ils étaient disposés dans un plan strictement parallèle au plan équatorial du pneumatique. On comprend que s'ils étaient posés sur l'ébauche avant sa conformation, ces renforts à 0° empêcheraient la conformation.

Des solutions à cette impossibilité sont proposées par exemple dans les documents US4050973 ou US4094354.

Le document US4050973 propose que les renforts à 0° soient préparés et posés sur l'ébauche de pneumatique sous une forme ondulée obtenue par tricotage de renforts à 0° avec des fils plus courts mais fragiles, ces fils étant rompus lors de la conformation. Un problème de ce procédé est manifestement la complexité et la lenteur de la préparation du tricot. Un autre problème est le fait d'avoir recours à des fils supplémentaires qui sont inutiles dans le produit final et qui peuvent en outre être nuisibles.

Le document US4094354 propose que les renforts à 0° soient préparés sous la forme d'une double bandelette de caoutchouc comprenant d'une part des renforts à 0° ondulés et d'autre part des fils tendus mais fragiles et destinés à être rompus lors de la conformation. Un problème de ce procédé est manifestement la complexité de la préparation de la double bandelette ainsi que le fait d'introduire des fils inutiles voire nuisibles dans le produit final.

Des dispositifs pour la préparation d'un renfort ondulé pour pneus, essentiellement comprenant deux poulies rotatives avec des doigts entre lesquels une bandelette de renforcement plate est déformée pour créer un renforcement ondulée sont connus par exemple des documents US 2005/0115218 - A et JPH 1025680 - A.

Un dispositif similaire comprenant deux courroies munies de parties saillantes et coopérantes pour onduler un fils de renforcement est connu du document JP 2006334643 - A.

Les documents US 5009732 - A, US 5393364 - A, US 2006/0191618 - A, US 2011/0079343 - A et US 5002621 - A révèlent des autres dispositifs pour obtenir des renforcements destinés à la fabrication de pneumatiques.

Ainsi, malgré ces propositions, l'industrie du pneumatique n'a pas adopté ce type de procédé d'assemblage de l'ensemble de l'ébauche au diamètre du seat pour la fabrication des pneumatiques comportant des renforts de sommet à 0° et en particulier pour la fabrication des pneumatiques radiaux modernes.

L'invention a donc pour objectif de pallier l'un au moins des inconvénients décrits ci-dessus.

L'invention propose pour cela un dispositif permettant la préparation et la pose d'une bandelette comprenant des renforts longitudinaux, ladite bandelette étant posée sous forme ondulée de sorte que la longueur des renforts longitudinaux est très sensiblement supérieure à la longueur de pose. On parle de « sur-longueur » pour désigner la différence entre la longueur de bandelette effectivement posée et la longueur parcourue sur la surface de pose.

Dans la présente demande, le terme « bandelette de renforcement » ou « bandelette» désigne une étroite bande de caoutchouc incluant des renforts longitudinaux et destinée à être posée par enroulement hélicoïdal au sein de l'ébauche d'un pneumatique. Les renforts peuvent par exemple être des câbles ou des monofilaments, en acier, en matériau minéral (fibre de verre ou de carbone), en fibre synthétique ou en matériau textile de manière connue en soi dans le domaine du pneumatique. Une bandelette comprend une pluralité de renforts, par exemple entre 3 et 10 renforts. Une telle bandelette a une largeur maximale de l'ordre de 15 à 20 mm selon la largeur totale de l'armature de frettage. De préférence encore, pour l'armature de frettage d'un pneumatique pour véhicule de tourisme, la bandelette a une largeur maximale de 11 mm. L'enroulement comprend une pluralité de tours, par exemple entre 10 et 30 tours pour constituer une armature de frettage complète.

L'invention propose pour cela un dispositif comme défini dans la revendication 1 pour la préparation d'une bandelette de renforcement destinée à la fabrication d'un pneumatique, ledit dispositif permettant de préparer une bandelette de renforcement ondulée à partir d'une bandelette de renforcement plate, ledit dispositif comprenant :
- un transporteur continu apte à guider une pluralité de doigts le long d'un circuit fermé comprenant au moins une portion de trajet rectiligne, lesdits doigts étant aptes à prendre appui sur une première face de la bandelette,
- une platine rotative selon un axe de platine, ladite platine rotative portant une pluralité de galets rotatifs d'axes parallèles à l'axe de platine, lesdits galets étant répartis sur un cercle sensiblement concentrique à l'axe de platine, lesdits galets étant aptes à prendre appui sur une deuxième face de la bandelette,
- des moyens de guidage de la bandelette de renforcement plate entrant dans le dispositif,
- des moyens de synchronisation de la rotation de la platine rotative et de l'avancement du transporteur continu,
dans lequel le circuit fermé comporte une portion d'interférence dans laquelle les moyens de synchronisation permettent aux doigts et aux galets de se déplacer selon des mouvements de rotation dans un plan commun perpendiculaire à l'axe de platine, les doigts et les galets étant intercalés dans ladite portion d'interférence de manière à imposer à la bandelette des ondes s'étendant dans ledit plan commun.

Des formes préférentielles du dispositif selon l'invention sont définies dans les revendications dépendantes 2 à 9.

De préférence, le transporteur continu est une chaîne guidée par un pignon d'interférence dans la portion d'interférence du circuit fermé.

De préférence encore, les galets sont répartis sur un cercle dont le diamètre est supérieur au diamètre du pignon d'interférence.

De préférence encore, les doigts sont portés par les axes des maillons de la chaîne.

De préférence encore, le dispositif comprend en outre un dérive-bandelette statique positionné dans la portion d'interférence pour pouvoir dériver la bandelette des doigts, de préférence au moins un quart de tour après le début de la portion d'interférence.

De préférence encore, les moyens de guidage comprennent des poulies aptes à guider la bandelette vers la portion d'interférence selon une direction proche dudit plan commun.

De préférence encore, le transporteur et la platine sont portés par une embase mobile par rapport à un bâti fixe.

De préférence encore, le dispositif comprend en outre des moyens de rouletage de la bandelette ondulée.

De préférence encore, le dispositif comprend en outre un cabestan apte à contrôler l'alimentation en bandelette plate.

L'invention concerne également une installation comme définie dans la revendication 10 comprenant un tel dispositif et comprenant en outre une forme de réception rotative placée en regard de la portion d'interférence de sorte que les sommets des ondes de la bandelette ondulée peuvent venir adhérer à la surface de la forme afin de permettre le transfert de la bandelette ondulée sur la forme.

L'invention concerne également un procédé de préparation d'une bandelette ondulée utilisant cette installation, comme définie dans la revendication 11.
Des formes préférentielles du procédé selon l'invention sont définies dans les revendications dépendantes 12 à 15.

De préférence, la forme de réception est constituée par une ébauche de pneumatique portée par un tambour.

De préférence encore, on enroule en hélice une pluralité de tours de la bandelette ondulée sur l'ébauche de pneumatique, les ondes de la bandelette s'étendant dans un plan sensiblement parallèle à un plan équatorial de l'ébauche.

De préférence encore, on fait varier la hauteur des ondes au cours de l'enroulement sur l'ébauche.

De préférence encore, on rabat les ondes de la bandelette contre l'ébauche à l'aide de moyens de rouletage.

La description qui suit permet de mieux comprendre la structure et le fonctionnement d'un dispositif selon l'invention selon des modes préférés de réalisation et s'appuie sur les figures 1 à 9 dans lesquelles :
- la figure 1 est une vue schématique représentant un premier mode de réalisation d'un dispositif selon l'invention au cours de son utilisation,
- la figure 2 est une vue schématique en perspective du dispositif de la figure 1,
- la figure 3 est une vue en détail du fonctionnement du dispositif de la figure 1,
- la figure 4 est une vue en coupe d'un exemple de réalisation du support des doigts du dispositif de la figure 1,
- la figure 5 est une vue en coupe d'un exemple de réalisation du support des galets sur la platine rotative du dispositif de la figure 1,
- les figures 6 et 7 sont des vues schématiques en perspective montrant deux exemples similaires d'ébauche de pneumatique obtenu par le procédé de l'invention utilisant un dispositif selon les figures précédentes,
- les figures 8 et 9 illustrent en perspective et en vue de dessus un mode de réalisation préféré du dispositif selon l'invention.

Sur les différentes figures, les éléments identiques ou similaires portent les mêmes références. La description de la structure et de la fonction de ces éléments identiques ou similaires n'est donc pas systématiquement reprise.

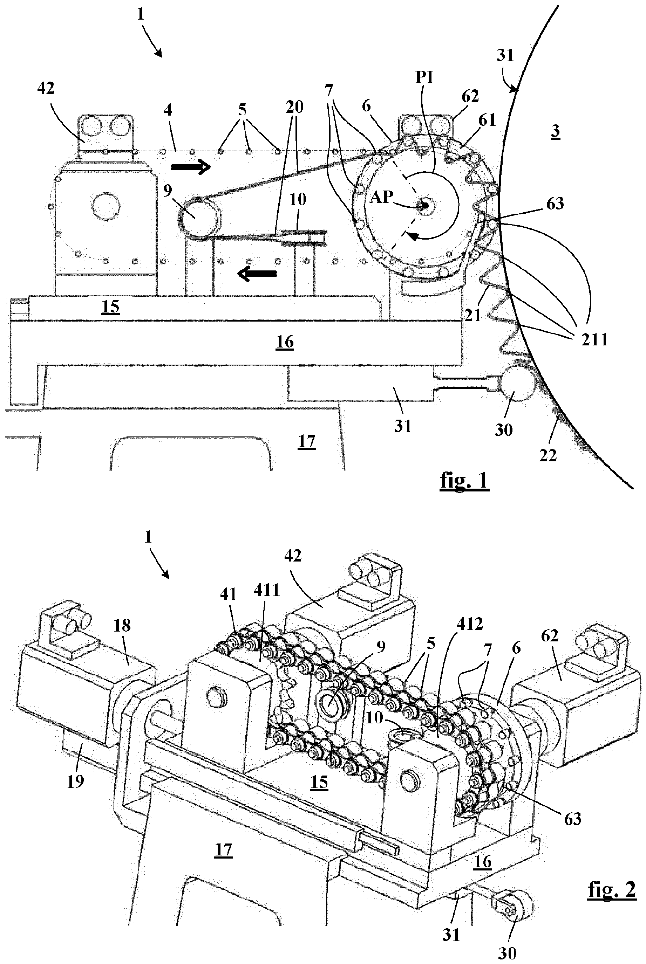

Sur la figure 1, on voit les principes essentiels du dispositif 1 selon l'invention. Ce dispositif permet la transformation d'une bandelette de renforcement plate 20 en une bandelette ondulée 21. De préférence, le dispositif permet en outre de transformer la bandelette ondulée 21 en une bandelette ondulée rouletée 22, c'est à dire une bandelette dont les ondes ont été rabattues sur une forme de réception (ici une forme rotative 3). On voit bien sur cette figure que la longueur de la bandelette posée sur la forme (et donc la longueur des renforts longitudinaux qu'elle contient) est très sensiblement supérieure à la longueur de pose parcourue sur la forme de réception.

Pour ce faire, le dispositif 1 comprend un circuit fermé le long duquel circulent des doigts 5 selon le sens indiqué sur la figure par les flèches. Les doigts sont guidés le long du circuit par un transporteur continu indexé 4 comme par exemple une chaîne ou une courroie crantée. Le transporteur continu est animé ici par un motoréducteur de transporteur 42. Une platine rotative 6 porte des galets 7 répartis à sa périphérie sur un cercle 61 concentrique à l'axe de rotation AP de la platine rotative. La rotation de la platine est contrôlée par un motoréducteur de platine 62.

Des moyens de synchronisation permettent de contrôler la vitesse des deux motoréducteurs de manière à ce que le déplacement des doigts 5 le long du circuit soit coordonné avec le déplacement des galets 7 de la platine, en particulier dans une portion d'interférence PI dans laquelle les doigts et les galets peuvent ainsi se déplacer dans un plan commun perpendiculaire à l'axe de platine AP. Les doigts 5 prennent appui sur la face supérieure de la bandelette alors que les galets 7 prennent appui sur la face inférieure de la bandelette. Lors du fonctionnement du dispositif, on comprend que les galets de la platine viennent s'intercaler entre les doigts et forcent progressivement la bandelette à prendre une forme ondulée 21.

Le dispositif 1 peut être associé comme représenté ici à une forme rotative 3. Le dispositif est alors placé face à la forme rotative de manière à ce que les galets de la platine rotative viennent l'un après l'autre s'approcher de la surface 31 de la forme. Le fonctionnement du dispositif décrit ci-dessus est synchronisé avec la rotation de la forme. Les sommets 211 des ondes de la bande ondulée 21 peuvent alors venir en contact et être pressés un à un contre la surface de la forme. La bandelette en caoutchouc peut ainsi adhérer ponctuellement à la surface de la forme rotative et être ensuite entraînée par celle-ci.

Le dispositif comprend de préférence un dérive-bandelette fixe 63 dont la fonction est de faire échapper axialement la bandelette 21 des doigts une fois que la bandelette ondulée est liée à la forme. La bandelette est alors entrainée par la forme rotative et échappe au contrôle des doigts et des galets du dispositif. Le dérive-bandelette agit dans la portion d'interférence PI, de préférence au moins un quart de tour après le début de celle-ci.

De préférence encore, des moyens de rouletage 30 permettent de rabattre les ondes de la bandelette ondulée 21 en les plaquant contre la surface de la forme. La bandelette ondulée rouletée 22 est ainsi encore mieux fixée quant à sa position et quant à l'orientation longitudinale de ses renforts, ce qui permet d'assurer la meilleure répartition de la sur-longueur des renforts sur la circonférence de la forme.

La figure 2 en perspective permet de mieux visualiser les éléments constitutifs de ce mode de réalisation préféré du dispositif. En particulier, si l'on compare les figures 1 et 2, on voit bien le principe des moyens qui assurent le guidage de la bandelette plate entrant dans le dispositif. Une poulie de guidage 9 placée dans le plan et à l'intérieur du circuit fermé du transporteur 4 guide la bandelette plate vers la portion d'interférence PI des doigts et des galets. La poulie de guidage 9 reçoit la bandelette d'une poulie d'alimentation 10 également placée dans le plan du circuit des doigts mais orientée de manière à recevoir la bandelette depuis l'extérieur, par exemple depuis l'arrière de la figure 1 dans ce mode de réalisation. On voit aussi que la bandelette 20 est vrillée d'environ un quart de tour entre les deux poulies.

Sur la figure 2 on voit également bien le principe d'entrainement des doigts 5 par le transporteur continu 4, ici sous la forme d'une chaîne 41. La chaîne 41 circule autour de deux pignons 411 et 412. Par conséquent, le circuit fermé du transporteur 4 comprend deux portions de trajet semi-circulaires autour des deux pignons 411 et 412 et deux portions de trajet rectilignes entre les deux pignons 411 et 412. Le pignon moteur 411 est entrainé par le moteur de transporteur 42. Avantageusement, la conception à chaînes 41 et pignons 411 et 412 du transporteur continu 4 permet de déporter le moteur de transporteur 42 par rapport au motoréducteur de platine 62. Le pignon d'interférence 412 est entrainé en rotation par la chaîne et a pour seule fonction de guider la chaîne et donc de guider les doigts 5 en regard des galets 7 de la platine 6. Comme discuté plus haut, le déplacement de la chaîne doit se faire en parfaite synchronisation avec la rotation de la platine 6 portant les galets 7. Cette synchronisation est garantie par les moyens de synchronisation, par exemple par un contrôle commun des deux moteurs électriques 42 et 62. Alternativement, le pignon d'interférence 412 peut être entrainé en rotation par le même moteur que la platine rotative. Du fait que le pignon 412 n'est pas nécessairement coaxial avec l'axe de platine, l'entrainement peut de préférence se faire par l'intermédiaire d'un joint d'Oldham ou d'un arbre équipé de joints homocinétiques.

Aussi, dans la portion d'interférence PI, le transporteur continu 4 offre une première portion de trajet rectiligne au sein de laquelle les doigts 5 se déplacent de manière rectiligne tandis que les galets 7 de la platine 6 viennent s'intercaler entre ces doigts 5, puis une portion de trajet semi-circulaire au sein de laquelle les doigts 5 se déplacent de manière circulaire à l'intérieur du cercle 61 sur lequel se déplacent les galets 7, puis de nouveau une portion de trajet rectiligne au sein de laquelle les doigts 5 se déplacent de manière rectiligne tandis que les galets 7 de la platine 6 recroisent ces doigts 5.

Sur la figure 2, on voit également qu'une embase 16 mobile par rapport à un bâti 17 permet de contrôler la position de l'ensemble des éléments du dispositif relativement à la forme de réception et permet également de contrôler la pression avec laquelle la bandelette ondulée 21 est appliquée par les galets sur la surface de la forme. Les moyens de rouletage, ici sous la forme d'un rouleau presseur 30, sont également portés par l'embase mobile 16, par exemple par l'intermédiaire d'un vérin pneumatique 31 (voir aussi figure 1) leur imprimant une force d'appui élastique. La position de l'embase mobile 16 est ici contrôlée par un vérin électrique 19.

Un coulisseau 15 lui-même mobile par rapport à l'embase 16 supporte les deux pignons du transporteur continu. On comprend qu'en déplaçant légèrement ce coulisseau par rapport au support de la platine rotative (et donc par rapport à l'axe de platine AP), on peut faire varier la hauteur des ondes imposées à la bandelette. De cette manière, on peut faire varier précisément la sur-longueur donnée à la bandelette ondulée. Le déplacement du coulisseau 15 est ici contrôlé par un vérin électrique de coulisseau 18. Afin de donner une indication d'ordre de grandeur, on peut dire qu'une sur-longueur de 50% est obtenue lorsque les ondes ont une hauteur (amplitude) d'environ 11 mm.

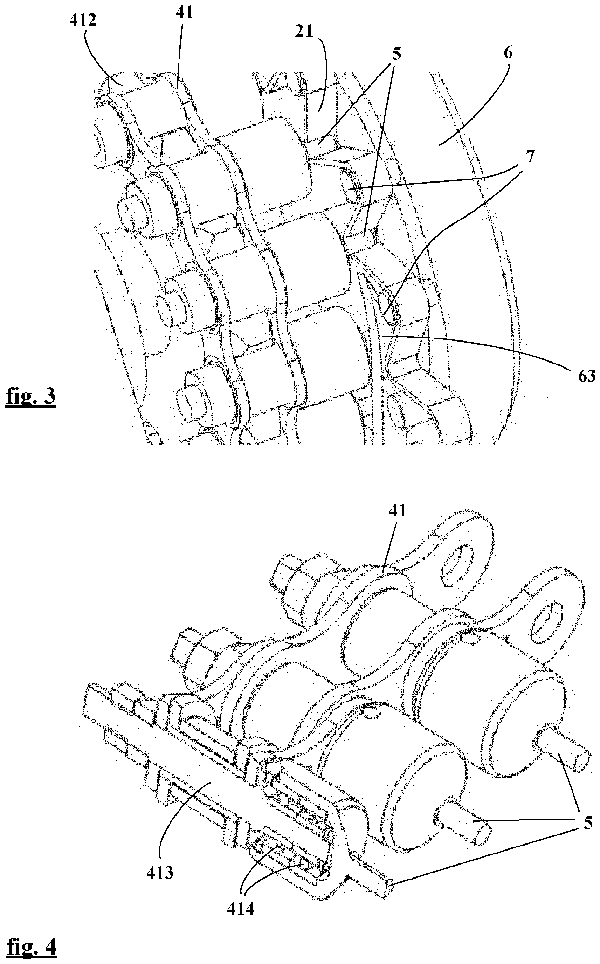

La figure 3 montre à une plus grande échelle le principe de l'invention concernant la formation des ondes par la coopération des doigts 5 et des galets 7 dans la portion d'interférence. On y voit également bien le principe du dérive-bandelette 63 (sous la forme d'une came statique) qui a pour fonction de dévier la bandelette pour la faire échapper du doigt 5 après qu'elle a été pressée contre la forme (non représentée ici). Pour cela, le dérive-bandelette comprend un plan incliné le long duquel glisse le bord de la bandelette ondulée 21. On comprend qu'à ce stade, la bandelette est déjà associée à la forme de réception.

La figure 4 montre à plus grande échelle encore un détail de ce mode de réalisation de l'invention et particulièrement du mode de réalisation du transporteur continu et des doigts. Les axes 413 des maillons de la chaine 41 supportent les doigts 5 montés à rotation sur lesdits axes par l'intermédiaire de roulements à billes 414. Les doigts sont donc libres de tourner par rapport à leurs supports afin de permettre à la bandelette de circuler pour former ses ondes en imposant le moins d'efforts possible au dispositif (et à la bandelette elle-même).

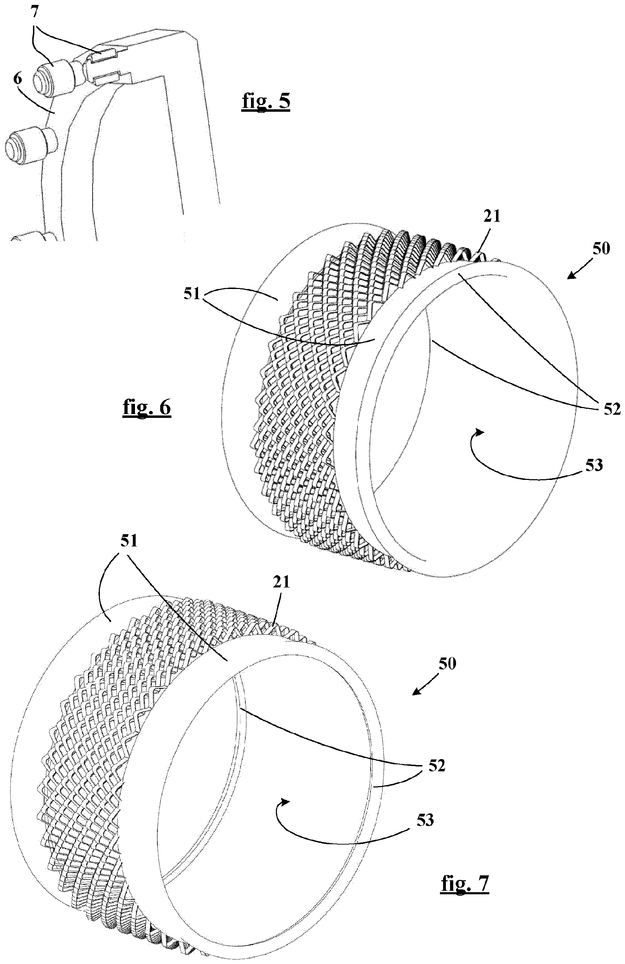

La figure 5 montre à grande échelle un détail de ce mode de réalisation de l'invention et particulièrement des galets 7 portés par la platine rotative 6. Les galets sont montés à rotation sur la platine par l'intermédiaire de paliers (par exemple des paliers lisses). Comme les doigts, les galets sont libres de tourner par rapport à leurs supports afin de permettre à la bandelette de circuler pour former ses ondes en imposant le moins d'efforts possible au dispositif (et à la bandelette elle-même).

Le dispositif de l'invention permet donc de mettre en oeuvre un procédé selon l'invention consistant à préparer et à poser sur la forme de réception une bandelette ondulée comportant une sur-longueur contrôlée. Ces deux étapes se déroulent successivement et en continu et de préférence à proximité immédiate l'une de l'autre. La bandelette ondulée étant ensuite entrainée par la forme de réception. La bandelette ondulée peut ensuite être stockée en bobines et constituer un produit semi-fini destiné à rentrer dans la fabrication ultérieure d'un pneumatique.

De préférence cependant, le procédé de l'invention consiste à appliquer la bandelette directement sur l'ébauche d'un pneumatique au cours de sa confection. Par rapport au procédé consistant à préparer un produit semi-fini, la pose directe sur l'ébauche permet de mieux garantir la précision de la pose, en particulier en ce qui concerne la valeur de la sur-longueur des renforts et la répartition régulière de cette sur-longueur sur la circonférence de l'ébauche. Dans ce cas, la forme de réception est donc constituée par une ébauche de pneumatique portée par un tambour et autour de laquelle on enroule en hélice un nombre adapté de tours de la bandelette ondulée afin de constituer l'armature de frettage du pneumatique. Cet enroulement peut se faire au diamètre du seat comme décrit plus haut en préambule de la demande puisque la sur-longueur des renforts de la bandelette ondulée autorise ensuite l'ébauche à être conformée, c'est à dire à prendre la forme pratiquement finale d'un pneumatique, avant que lesdits renforts à 0° soient réellement mis en tension.

Au cours de l'enroulement en hélice autour de l'ébauche, on peut en outre faire varier la valeur de la sur-longueur de la bandelette grâce au contrôle de la position du coulisseau 15. On peut par exemple prévoir que la sur-longueur soit plus importante au centre qu'aux épaules de la bande de roulement de sorte qu'un certain galbe est donné au pneumatique lors de la conformation de l'ébauche complète.

A la figure 6, on a représenté schématiquement un exemple de cette application de l'invention à la constitution d'une armature de frettage directement au sein d'une ébauche de pneumatique 50. C'est donc cette ébauche qui a servi de forme de réception pour la bandelette ondulée préparée par le dispositif de l'invention. On reconnaît les renforts à 0° disposés sous la forme d'une bandelette ondulée 21 telle que formée par le dispositif de l'invention. Les ondes de la bandelette s'étendent dans un plan parallèle au plan équatorial de l'ébauche (en négligeant l'angle d'hélice de l'enroulement comme discuté plus haut). Une quinzaine de tours ont été enroulés autour de l'ébauche afin de constituer l'armature de frettage complète.

On voit également la couche contenant les renforts de carcasse 51 et les bourrelets 52 contenant les renforts de bourrelets (souvent appelés « tringles »). Des nappes de renforts de sommet peuvent être placées sous l'armature de frettage. Une couche de gomme d'étanchéité 53 est de préférence présente à l'intérieur de la carcasse 51. Les bandelettes de renforts à 0° sont représentées ici sous la forme ondulée 21 mais non rouletée (référencée 22 sur les figures précédentes) afin de faciliter la lecture du dessin. On comprend que la forme rouletée peut être préférée pour améliorer la précision du positionnement des renforts dans la suite du procédé comme décrit plus haut. Une bande de roulement et des gommes de protection des flancs peuvent également être ajoutées à cette ébauche. Tous les constituants du futur pneumatique peuvent ainsi être posés au même diamètre réduit, c'est à dire sur un même tambour au diamètre du seat et donc sans conformation intermédiaire.

Alternativement, le tambour de pose peut également avoir un diamètre légèrement supérieur au diamètre du seat s'il comprend des gorges pour recevoir les bourrelets de l'ébauche. On obtient alors plutôt une ébauche telle que représentée à la figure 7.

Dans un cas comme dans l'autre, l'ensemble ainsi constitué peut alors être placé dans une presse de vulcanisation, conformé puis moulé et vulcanisé de manière connue en soi.

Afin de donner à l'ensemble de l'enroulement une rigidité homogène, il peut être prévu d'enrouler le premier et le dernier tour de bandelette sans déplacement axial et donc sur lui-même. De même, pour obtenir une densité de renfort suffisante, il peut être préférable d'enrouler successivement une pluralité de couches d'armature de frettage selon le principe de l'invention.

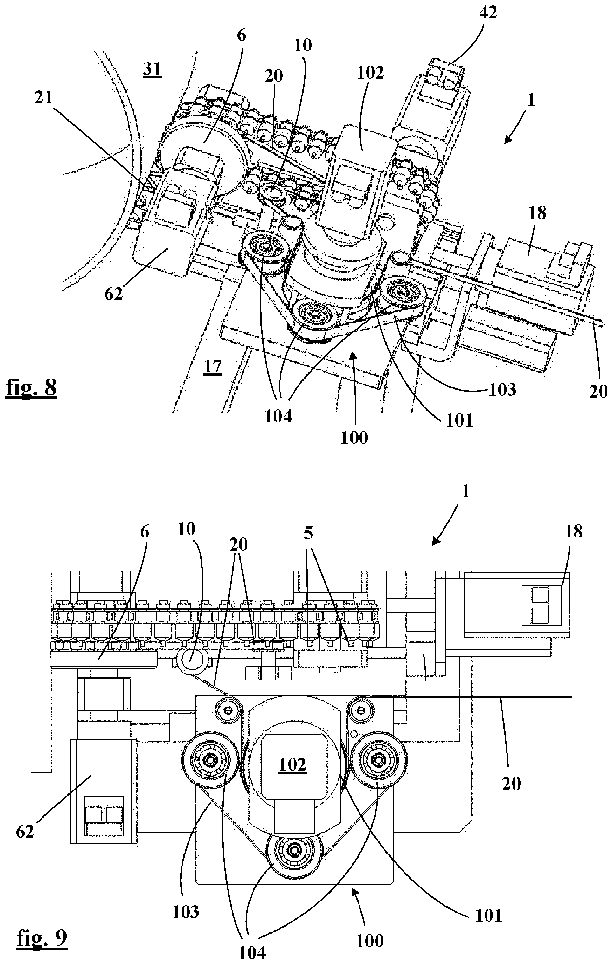

De préférence, l'alimentation du dispositif en bandelette plate fait l'objet d'un contrôle précis de son débit. Ceci peut être obtenu grâce à l'utilisation d'un cabestan motorisé 100 comme représenté aux figures 8 et 9. Sur ces figures, on voit la bandelette plate 20 être guidée autour de la poulie 101 du cabestan, la rotation de cette poulie étant contrôlée par le moteur de cabestan 102. De préférence encore, une sangle 103 tendue entre des renvois 104 vient plaquer la bandelette sur la poulie de cabestan afin de lui interdire tout glissement intempestif. La vitesse de rotation du cabestan, c'est à dire la vitesse de la bandelette plate alimentant le dispositif, peut être contrôlée précisément en fonction de la vitesse de rotation de la forme de réception afin de contrôler tout aussi précisément la sur-longueur des renforts posés, y compris de manière dynamique au cours de l'enroulement en hélice de la bandelette ondulée comme décrit plus haut.

Afin de s'adapter aux variations de longueurs délivrées par le cabestan, le décalage entre l'axe de platine AP et l'axe du pignon d'interférence peut s'adapter passivement au moyen par exemple d'un simple ressort tendant à reculer le coulisseau 15 ou activement par l'intermédiaire d'une gestion basée sur une mesure de la tension effective de la bandelette.

## Revendications

1. Dispositif (1) pour la préparation d'une bandelette de renforcement destinée à la fabrication d'un pneumatique, ledit dispositif permettant de préparer une bandelette de renforcement ondulée (21) à partir d'une bandelette de renforcement plate (20), ledit dispositif comprenant :
- un transporteur continu (4) apte à guider une pluralité de doigts (5) le long d'un circuit fermé comprenant au moins une portion de trajet rectiligne, lesdits doigts étant aptes à prendre appui sur une première face de la bandelette,
- une platine (6) rotative selon un axe de platine (AP), ladite platine rotative portant une pluralité de galets rotatifs (7) d'axes parallèles à l'axe de platine, lesdits galets étant répartis sur un cercle (61) sensiblement concentrique à l'axe de platine, lesdits galets étant aptes à prendre appui sur une deuxième face de la bandelette,
- des moyens de guidage (9, 10) de la bandelette de renforcement plate entrant dans le dispositif,
- des moyens de synchronisation de la rotation de la platine rotative et de l'avancement du transporteur continu,
dans lequel le circuit fermé comporte une portion d'interférence (PI) dans laquelle les moyens de synchronisation permettent aux doigts et aux galets de se déplacer selon des mouvements de rotation dans un plan commun perpendiculaire à l'axe de platine, les doigts et les galets étant intercalés dans ladite portion d'interférence de manière à imposer à la bandelette des ondes s'étendant dans ledit plan commun.

2. Dispositif selon la revendication 1 dans lequel le transporteur continu est une chaîne guidée par un pignon d'interférence (412) dans la portion d'interférence (PI) du circuit fermé.

3. Dispositif selon la revendication 2 dans lequel les galets (7) sont répartis sur un cercle (61) dont le diamètre est supérieur au diamètre du pignon d'interférence (412).

4. Dispositif selon l'une des revendications 2 ou 3 dans lequel les doigts (5) sont portés par les axes (413) des maillons de la chaîne.

5. Dispositif selon l'une des revendications précédentes comprenant en outre un dérive-bandelette statique positionné dans la portion d'interférence (PI) pour pouvoir dériver la bandelette des doigts (5), de préférence au moins un quart de tour après le début de la portion d'interférence.

6. Dispositif selon l'une des revendications précédentes dans lequel les moyens de guidage comprennent des poulies (9, 10) aptes à guider la bandelette vers la portion d'interférence selon une direction proche dudit plan commun.

7. Dispositif selon l'une des revendications précédentes dans lequel le transporteur et la platine sont portés par une embase (16) mobile par rapport à un bâti fixe (17).

8. Dispositif selon l'une des revendications précédentes comprenant en outre des moyens de rouletage (30, 31) de la bandelette ondulée.

9. Dispositif selon l'une des revendications précédentes comprenant en outre un cabestan (100) apte à contrôler l'alimentation en bandelette plate.

10. Installation (2) comprenant le dispositif (1) selon l'une des revendications précédentes et comprenant en outre une forme de réception rotative (3) placée en regard de la portion d'interférence (PI) de sorte que les sommets des ondes de la bandelette ondulée peuvent venir adhérer à la surface de la forme afin de permettre le transfert de la bandelette ondulée sur la forme.

11. Procédé de préparation d'une bandelette ondulée utilisant l'installation de la revendication 10.

12. Procédé selon la revendication 11 dans lequel la forme de réception est constituée par une ébauche de pneumatique (50) portée par un tambour (3).

13. Procédé selon la revendication 12 dans lequel on enroule en hélice une pluralité de tours de la bandelette ondulée sur l'ébauche de pneumatique, les ondes de la bandelette s'étendant dans un plan sensiblement parallèle à un plan équatorial de l'ébauche.

14. Procédé selon la revendication 13 dans lequel on fait varier la hauteur des ondes au cours de l'enroulement sur l'ébauche.

15. Procédé selon l'une des revendications 12 à 14 dans lequel on rabat les ondes de la bandelette contre l'ébauche à l'aide de moyens de rouletage.

## Patentansprüche

1. Vorrichtung (1) zur Herstellung eines Verstärkungsstreifens, der für die Herstellung eines Reifens bestimmt ist, wobei die Vorrichtung ermöglicht, einen gewellten Verstärkungsstreifen (21) aus einem flachen Verstärkungsstreifen (20) herzustellen, wobei die Vorrichtung aufweist:
einen Endlosförderer (4), der geeignet ist, mehrere Finger (5) entlang eines geschlossenen Kreislaufs zu führen, der mindestens einen geradlinigen Streckenabschnitt aufweist, wobei die Finger geeignet sind, auf einer ersten Seite des Streifens zur Auflage zu kommen,
- eine Platte (6), die entlang einer Plattenachse (AP) drehbar ist, wobei die drehbare Platte mehrere drehbare Rollen (7) mit Achsen, die parallel zu der Plattenachse sind, aufweist, wobei die Rollen auf einem Kreis (61) verteilt sind, der im Wesentlichen konzentrisch zu der Plattenachse ist, wobei die Rollen geeignet sind, auf einer zweiten Seite des Streifens zur Auflage zu kommen,
- Führungsmittel (9, 10) des flachen Verstärkungsstreifens, der in die Vorrichtung eintritt,
- Mittel zum Synchronisieren der Drehung der drehbaren Platte und des Vorschubs des Endlosförderers,
wobei der geschlossene Kreislauf einen Interferenzabschnitt (PI) aufweist, in dem die Mittel zum Synchronisieren den Fingern und den Rollen ermöglichen, sich gemäß den Drehbewegungen in einer gemeinsamen Ebene zu bewegen, die zu der Plattenachse senkrecht ist, wobei die Finger und die Rollen in dem Interferenzabschnitt derart eingebaut sind, um dem Streifen Wellen aufzuerlegen, die sich in der gemeinsamen Ebene erstrecken.

2. Vorrichtung nach Anspruch 1, wobei der Endlosförderer eine Kette ist, die von einem Interferenzritzel (412) in dem Interferenzabschnitt (PI) des geschlossenen Kreislaufs geführt wird.

3. Vorrichtung nach Anspruch 2, wobei die Rollen (7) auf einem Kreis (61) verteilt sind, dessen Durchmesser größer als der Durchmesser des Interferenzritzels (412) ist.

4. Vorrichtung nach einem der Ansprüche 2 oder 3, wobei die Finger (5) von den Achsen (413) der Glieder der Kette getragen sind.

5. Vorrichtung nach einem der vorhergehenden Ansprüche, ferner umfassend einen statischen Streifenabweicher, der in dem Interferenzabschnitt (PI) positioniert ist, um den Streifen vorzugsweise mindestens eine Vierteldrehung nach dem Beginn des Interferenzabschnitts von den Fingern (5) ableiten zu können.

6. Vorrichtung nach einem der vorhergehenden Ansprüche, wobei die Führungsmittel Riemenscheiben (9, 10) aufweisen, die geeignet sind, den Streifen in einer Richtung, die nahe der gemeinsamen Ebene ist, zu dem Interferenzabschnitt zu führen.

7. Vorrichtung nach einem der vorhergehenden Ansprüche, wobei der Förderer und die Platte von einer Grundplatte (16) getragen sind, die gegenüber einem festen Gestell (17) beweglich ist.

8. Vorrichtung nach einem der vorhergehenden Ansprüche, ferner umfassend Mittel zum Festwalzen (30, 31) des gewellten Streifens.

9. Vorrichtung nach einem der vorhergehenden Ansprüche, ferner umfassend einen Kapstan (100), der geeignet ist, die Zufuhr des flachen Streifens zu steuern.

10. Anlage (2), umfassend die Vorrichtung (1) nach einem der vorhergehenden Ansprüche und ferner umfassend eine drehbare Aufnahmeform (3), die gegenüber von dem Interferenzabschnitt (PI) derart angeordnet ist, dass die Scheitel der Wellen des gewellten Streifens an der Oberfläche der Form haften können, um das Übertragen des gewellten Streifens auf die Form zu ermöglichen.

11. Verfahren zur Herstellung eines gewellten Streifens, das die Anlage nach Anspruch 10 verwendet.

12. Verfahren nach Anspruch 11, wobei die Aufnahmeform aus einem Reifenrohling (50) gebildet wird, der von einer Trommel (3) getragen wird.

13. Verfahren nach Anspruch 12, wobei mehrere Wicklungen des gewellten Streifens spiralförmig auf den Reifenrohling aufgewickelt werden, wobei sich die Wellen des Streifens in einer Ebene erstrecken, die im Wesentlichen parallel zu einer Äquatorialebene des Rohlings ist.

14. Verfahren nach Anspruch 13, wobei die Höhe der Wellen beim Aufwickeln auf den Rohling geändert wird.

15. Verfahren nach einem der Ansprüche 12 bis 14, wobei die Wellen des Streifens mit Hilfe von Mitteln zum Festwalzen gegen den Rohling umgeschlagen werden.

## Claims

1. Device (1) for preparing a reinforcing strip intended for the manufacture of a tyre, the said device making it possible to prepare an undulating reinforcing strip (21) from a flat reinforcing strip (20), the said device comprising:
- a continuous transporter (4) that is able to guide a plurality of fingers (5) along a closed circuit comprising at least one rectilinear path portion, said fingers being able to bear against a first face of the strip,
- a rotary support plate (6) that rotates about a support plate axis (AP), said rotary support plate bearing a plurality of rotary rollers (7) having axes parallel to the support plate axis, said rollers being distributed in a circle (61) substantially concentric with the support plate axis, said rollers being able to bear against a second face of the strip,
- guide means (9, 10) for guiding the flat reinforcing strip entering the device,
- means for synchronizing the rotation of the rotary support plate and the forward motion of the continuous transporter,
in which the closed circuit has an intersecting portion (PI) in which the synchronizing means allow the fingers and the rollers to move in rotational movements in a common plane perpendicular to the support plate axis, the fingers and the rollers being interposed in said intersecting portion so as to impose waves on the strip that extend in said common plane

2. Device according to Claim 1, wherein the continuous transporter is a chain guided by an intersecting sprocket (412) in the intersecting portion (PI) of the closed circuit.

3. Device according to Claim 2, wherein the rollers (7) are distributed in a circle (61), the diameter of which is greater than the diameter of the intersecting sprocket (412).

4. Device according to either of Claims 2 or 3, wherein the fingers (5) are carried by the pins (413) of the links of the chain.

5. Device according to one of the preceding claims, also comprising a static strip diverter positioned in the intersecting portion (PI) in order to be able to divert the strip from the fingers (5), preferably at least a quarter turn after the start of the intersecting portion.

6. Device according to one of the preceding claims, wherein the guide means comprise pulleys (9, 10) able to guide the strip towards the intersecting portion in a direction close to the said common plane.

7. Device according to one of the preceding claims, wherein the transporter and the support plate are borne by a base (16) that is able to move with respect to a fixed structure (17).

8. Device according to one of the preceding claims, also comprising stitching means (30, 31) for stitching the undulating strip.

9. Device according to one of the preceding claims, also comprising a winch (100) that is able to control the supply with flat strip.

10. Installation (2) comprising the device (1) according to one of the preceding claims and further comprising a rotary receiving form (3) placed facing the intersecting portion (PI) so that the peaks of the waves of the undulating strip can adhere to the surface of the form so as to allow the undulating strip to be transferred onto the form.

11. Method for preparing an undulating strip using the installation of Claim 10.

12. Method according to Claim 11, wherein the receiving form consists of a green tyre blank (50) carried by a drum (3).

13. Method according to Claim 12, wherein a plurality of terms of the undulating strip are wound in a helix onto the green tyre blank, the waves of the strip extending in a plane substantially parallel to an equatorial plane of the green tyre blank.

14. Method according to Claim 13, wherein the height of the waves is varied during the process of winding onto the blank.

15. Method according to one of Claims 12 to 14, wherein the waves of the strip are folded down against the green tyre blank using stitching means.
